Europäisches Patentamt

(19) **European Patent Office**

**Office européen des brevets**

(11) Publication number: **0 009 965**
**B1**

(12) **EUROPEAN PATENT SPECIFICATION**

(45) Date of publication of patent specification: 07.03.84

(51) Int. Cl.³: **H 01 S 3/03**

(21) Application number: 79302078.5

(22) Date of filing: 02.10.79

(54) Gas laser.

(30) Priority: 02.10.78 US 947384
02.10.78 US 948077

(43) Date of publication of application:
16.04.80 Bulletin 80/8

(45) Publication of the grant of the patent:
07.03.84 Bulletin 84/10

(84) Designated Contracting States:
DE GB NL

(56) References cited:
US - A - 3 868 593
US - A - 4 031 428

JAPANESE JOURNAL APPLIED PHYSICS, vol.
15, no. 7, July 1976, Tokyo, JP, T. IIJIMA: "On
the excitation mechanism of 4924 A laser line in
the He-Zn hollow cathode laser discharge",
pages 1395-1396
JAPANESE JOURNAL OF APPLIED PHYSICS,
vol. 13, no. 4, April 1974, Tokyo, JP, S. FUKUDA
& M. MIYA: "A metal-ceramic He-Cd II laser
with sectioned hollow cathodes and output
power characteristics of simultaneous
oscillations", pages 667-674

(73) Proprietor: XEROX CORPORATION
Xerox Square - 020
Rochester New York 14644 (US)

(72) Inventor: Wang, Shing C.
5419 Robinhood Avenue
Temple City, California (US)
Inventor: Hamerdinger, Randolph W.
7453 Thornhurst
Glendora, California 91740 (US)

(74) Representative: Goode, Ian Roy et al,
European Patent Attorney c/o Rank Xerox Patent
Department 338 Euston Road
London NW1 3BH (GB)

## Gas Laser

This invention relates to a gas laser for producing an output laser beam having a plurality of colors including an elongate envelope containing a gaseous medium, optically aligned hollow coaxial anode and cathode means for connection to a voltage supply to produce an electrical discharge in the gaseous medium, said cathode means comprising at least two separate cathodes, and reflector means at or near the ends of the envelope. A laser of this kind is described in US Patent No. 3 868 593.

The present state of laser technology has advanced substantially from that available in prior years. For example, a variety of laser devices, including gas lasers, dye lasers and solid state lasers are available for particular customer applications. At this time, a substantial portion of the commercially marketed lasers are of the gas variety. The gas lasers available are generally limited to a laser device which produces on a single wavelength (emission line) or a single color output. For example, helium-neon laser devices which are available commercially generate only the red wavelength (i.e., 632.8 nm) output. Although argon ion gas lasers are available which are capable of simultaneously producing blue and green output light, the argon gas laser is considered to be too costly, inefficient and cumbersome as far as size is concerned to have extensive commercial applications.

The laser disclosed in US Patent No. 4,021,845 produces white light (light having multiple lines) which includes three of the primary colors; red, blue and green. The laser disclosed in US Patent No. 3 868 593 is also capable of producing light of a variety of wavelengths. This is very advantageous since an end user has the capability of selecting the desired wavelength(s) for a particular application from a plurality of available wavelengths, the lasers being relatively inexpensive and of a physical size which makes them attractive for many commercial applications.

Although the known lasers have performed satisfactorily, it would be desirable if the power level for a selected wavelength could be increased depending on the type of application required. In other words, what is desired is a multiline laser device which is capable of operating at high input power density which in turn allows the power level for a particular wavelength desired to be increased, has improved stability characteristics, is compact and is effective while providing the multiple line output.

The gas laser of the present invention is intended to provide these additional advantages, and is characterised in that at least two of the separate cathodes have a different inside diameter to match the laser cavity mode such that optimal laser output power extraction for each color is produced.

The hollow-cathode gas laser of the present invention provides the advantage that it allows the power outputs of the laser at the selected wavelengths to be optimised.

A gas laser in accordance with the invention will now be described, by way of example, with reference to the accompanying drawings, in which:—

Figure 1 is a side view of the laser of the present invention which utilizes Brewster windows;

Figures 1A and 1B together constitute a cross-sectional view of the laser shown in Figure 1;

Figure 2 is a cross-sectional view of the laser of the present invention utilizing integral mirrors; and

Figures 3A and 3B are simplified representations of examples of how the laser of the present invention is configured to optimize the particular laser mode generated in the laser cavity.

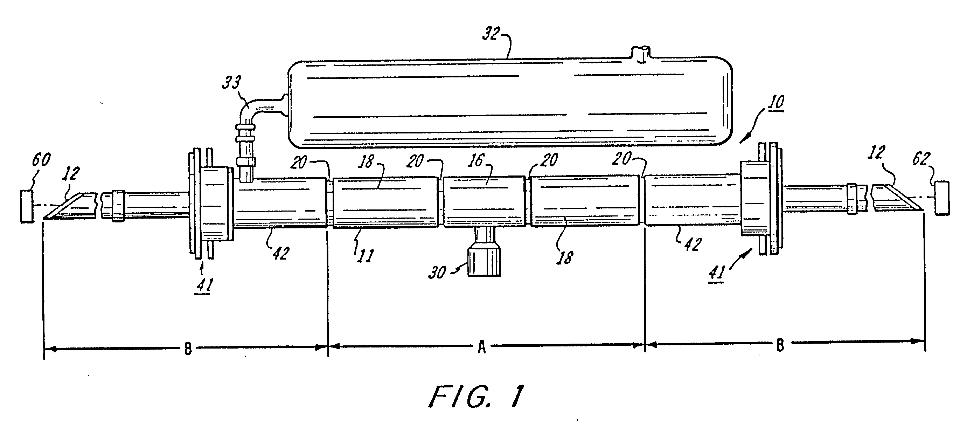

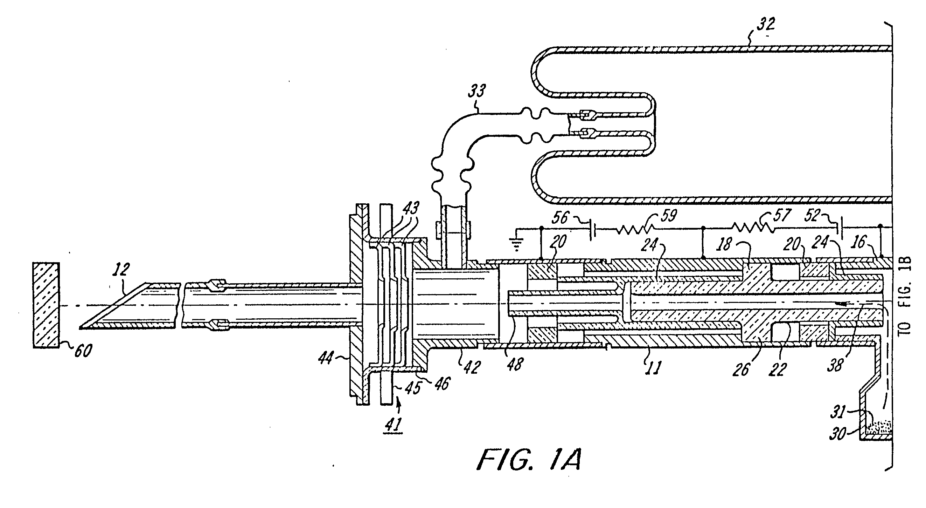

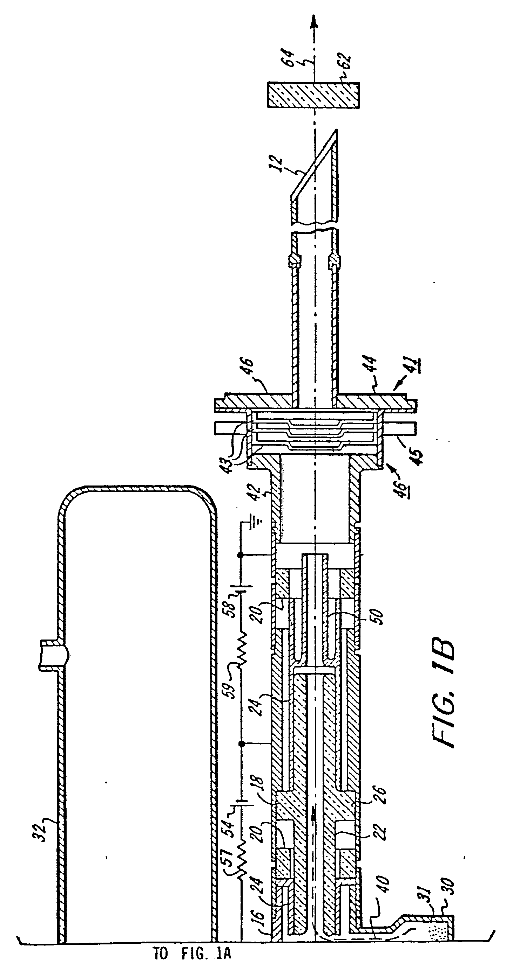

Referring to Figures 1, 1A and 1B, an embodiment of the laser tube device 10 of the present invention is illustrated, the embodiment utilizing Brewster windows 12. The laser device of the present invention, which includes outer envelope 11, may be thought of as comprising two major components, anode-cathode assembly A and Brewster window end sections B.

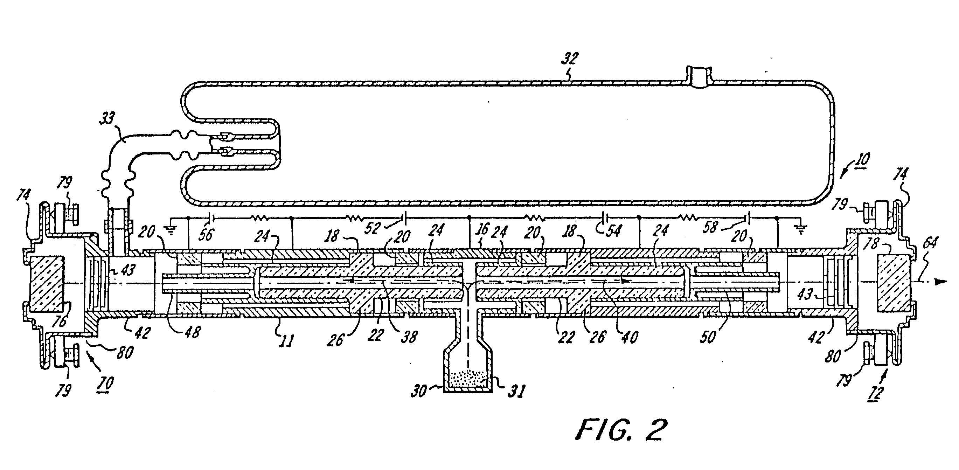

The anode-cathode assembly A comprises a center-located short cylindrical anode 16, and two segmented cylindrical hollow cathodes 18 located symmetrically on each side of the anode 16. The anode 16 and cathode 18 are electrically insulated by cylindrical metal-to-ceramic seals 20. A substantial portion of the outer surface 22 of each cathode 18 is partially covered with glass or ceramic insulating sleeves 24 to prevent electrical discharge in the outer cathode surface and promote effective inner cathode discharge. The cathodes, made preferably of molybdenum, are thermally connected to the external environment through structure 26; and the laser tube envelope 11 which is made of stainless steel or Kovar. Thus, the heat generated within the cathodes 18 due to the electrical discharge can be effectively conducted away to the environment which allows higher input power loading to the cathodes when higher laser excitation power is required for certain laser actions. For example, argon as the active laser medium requires more power than cadmium for laser operation. Further, the feature allows the laser device to be more compact than would otherwise be possible. For laser operation utilizing metal vapors, a reservoir 30 containing the particular metal 31 to be utilized is provided and comprises part of the anode-cathode assembly A. The reservoir 30 is thermally decoupled from the anode-cathode assembly A through a heat-choke arrangement so that the metal vapor pressure can be separately and independently controlled by external heater means (not shown). Although reservoir 30 is shown connected within anode 16, the reservoir could be connected directly into the bore of cathodes 18 if desired. In the embodiments illustrated in the figures, an auxiliary gas, such as helium, is stored in reservoir 32 and connected into the main tube envelope 11 via tubing 33. Although gases other than helium may be utilized, helium will be discussed hereinafter since the laser of the present invention is particularly useful as helium-cadmium or other helium-metal vapor, helium-rare gas, helium-metal halides and dimer lasers. In the case when cadmium metal is to be utilized as the active lasing medium, a predetermined charge of cadmium metal 31 is placed in reservoir 30 and the reservoir is then heated. A controlled amount of metal vapor is released into the anode section, and is transported from anode 16 through each cathode section by natural diffusion and D.C. cataphoresis action. The path of the vapor flow is illustrated by reference numerals 38 and 40. Thus, near uniform vapor density can be assured within and throughout the cathode sections 18. The adjustable Brewster window end sections B are attached to each end of the anode-cathode assembly A. Each end section comprises a Brewster window 12, an auxiliary anode portion 42 and a metal vapor condensor portion 41. The auxiliary anode portion 42 provides an auxiliary discharge into cathode 18 to assure discharge uniformity within cathode 18 and, in conjunction with finite positive column discharge section 48, metal vapor can be prevented from reaching the end window 12 (or mirror 76 in the Figure 2 embodiment) by DC cataphoretic confinement. Metal vapor condensor portion 41 comprises a flexible flange 44, a rigid flange 45, and a fixture 46 acting as a condensing baffle to protect against the diffusion of metal vapor, such as cadmium, to windows 12. The fixture 46 comprises a plurality of apertured Kovar discs 43. Adjustment of fixture 46 by screws (not shown) allows adjustment of the Brewster angle of window 12 which can compensate for any offset from the correct angle due to the final assembly process.

Auxiliary anode 42 contributes an auxiliary discharge to the main discharge in providing a uniform discharge throughout the cathode section and also inhibits movement of the cadmium vapor towards Brewster windows 12 by the cataphoretic effect.

Sections 48 and 50, made of glass or quartz, are also provided to guide the electrical discharge into the inner bore of the cathode 18 along paths 38 and 40.

As is well known in the laser art, a relationship exists between the pressure of the carrier gas medium and the internal diameter of the laser bore (discharge active region) which determines the optimization of a particular laser transaction. In particular, the relationship P.d, wherein P is the pressure of the carrier gas and d is the internal diameter, of the laser bore, determines whether a particular transition, and in particular, the output power of the light produced by such transition, is optimized.

For example, in the laser of the present invention which is capable of producing multicolor light the color red (636 nm) is optimized for a low P.d product, typically 2.66 mbar.cm. The color green (537.8 nm) is optimized for a high P.d product, typically 10.64 mbar.cm, and the color blue (441.6 nm) is optimized for an intermediate P.d product, typically 3.99 mbar.cm.

Since the pressure of the carrier gas, such as helium in the preferred embodiments, is maintained at an essentailly constant value, the aforementioned relationship indicates that the diameter parameter is to be varied in order to provide the optimized P.d product for a particular light output. Although a laser device with one cathode-anode assembly can generate three colors at a uniform bore diameter and fixed helium pressure as set forth in the aforementioned copending application, for better control of the individual transitions (colors) at least three cathode sections with different inner diameters are preferred with each cathode optimized for each color. For even finer control of the color output, two or more cathode sections of the same internal diameter and length may be incorporated in the design of the laser for each color. The actual internal diameter and length of each cathode selected is dependent on the optimal P.d. relation and the power level requirement for each color. The length of each section can also be varied to adjust the gain of the laser transition associated with that section. The total laser power output also can be controlled by adjustment of the current density through each hollow cathode section. If the laser device is arranged to extract a light output which simultaneously contains a plurality of colors, the use of the optimized cathode sections provides for color balancing and control.

The laser device 10 can comprise more than one anode-cathode assembly depending upon the particular output power requirement. It should be noted that other active lasing media could be utilized, such as metals (such as zinc and selenium), metal halides (such as copper chloride and mercury chloride), rare gases (such as helium-xenon and helium-krypton) and selenium iodide (dimer type lasers). The preferred assembly (in the embodiment shown in Figures 1, 1A and 1B) has an envelope window to window spacing of about 42 cm, 2.0 cm outside diameter, 1.7 cm inside diameter, a molybdenum hollow cathode 18 of approximately 5 cm length, 0.3 cm inside diameter, and 0.9 cm outside diameter, and a stainless steel anode 16 of 1.6 cm length, 1.5 cm inside diameter and 2.0 cm outside diameter with reservoir 30 filled with cadium. The d.c. electrical discharge between anode 16 and cathodes 18 is maintained at a d.c. voltage level in the range of from about 250 to about 350 volts by voltage sources 52 and 54 via ballast resistors 57 with a corresponding variable current ranging from about 20—200 milliamps being maintained. Voltage sources 56 and 58 apply a potential between the auxiliary anode 42 via appropriate ballast resistors 59. The discharge within cathods 18 is operated in the mode of negative glow discharge. The active length of the device is about 10 cm and CW (continuous wave) laser action is obtained in the He-Ne red (632.8 nm) transition at 2.66—3.99 mbar (2—3 Torr) and a He:Ne (helium-neon) ratio = 7:1, and all visible color (red, 636 nm, 635 nm; green, 533.7 nm, 537.8 nm; and blue 441.6 nm) transitions in the He-Cd laser are obtained at about 13.3 mbar (10 Torr) of He and a Cd temperature of about 310°C.

By appropriate choice of reflectors 60 and 62 which form the optical resonator, the desired output wavelength(s) can be produced. Reflectors 60 and 62 may be multiple layer dielectric coated reflectors, reflector 62 being typically adapted to be partially transmissive to enable a portion 64 of the coherent radiation to be extracted from the laser device 10. Reflector 62 may be a broadband output reflector if output 64 is multi-color.

The principal advantage of the present invention is provided by the segmentation of the hollow cathode 18 into more than two segments, with the cathode segment portions preferably being of a variable diameter and of a varying length. Segmentation allows a substantially uniform and controllable discharge to occur inside the cathode segments which therefore provides a substantially uniform excitation and vapor density inside the cathodes to assure effective pumping of the laser transition and to create a more efficient laser light output. Further, outer cathode structure 26 provides a more efficient way of dissipating the power generated in the cathodes thereby allowing higher power output density loading. The present invention also allows the design of laser power output levels for each selected laser medium by adjusting the number of assemblies, thus adjusting the active length and gain of the laser, the laser overall gain being proportional to the active length (total length of discharge within cathodes) of the laser. The inner diameter and length of each cathode can be varied to match the laser cavity mode such that optimal laser output power extraction can be provided for each color (total color output thereby being optimized) and also provides for color balancing and control. For example, for a helium-cadmium laser operating at approximately 10 Torr of helium, a voltage of 280 volts, a current in each cathode section of approximately 140 milliamps (30 mA/cm²) and a cadmium temperature of 310°C, two cathodes (single cathode-anode assembly including a single anode) of an inner diameter of 0.3 cm and a length of 5 cm will provide a blue and green line at 4—5 milliwatts of power and the red line at 0.5 milliwatts of power; for four cathodes (dual cathode-anode assembly having three anodes) having the same dimensions as the corresponding two cathode arrangement, the blue and green lines will have a power of 15 milliwatts associated therewith and a red line having 2 milliwattts of power associated therewith.

The laser configuration for additional cathode-anode assemblies is similar to the assembly shown in figures 1, 1A and 1B, the additional assemblies being arranged coaxially between the end sections along the optical axis of the laser 10.

The Figure 2 embodiment is substantially identical to the embodiment shown in Figures 1, 1A and 1B with the exception that the Brewster window end section B and the optical reflectors 60 and 62 are replaced with integral mirror subassemblies 70 and 72. Each subassembly comprises an apertured flange member 74, mirrors 76 and 78 bonded to the flange members 74, a metal flange member 80, sealed to the end of the tube envelope 11, which is welded to flange member 74 and mirror adjustment screws 79. Further, in lieu of the complete portion 41, only the metal vapor condensing baffles 43 are located within the envelope 11 adjacent the auxiliary anode portion 42. Mirror 78 is selected to allow laser light 64 to be extracted from the laser 10.

The laser mirrors 76 and 78 are coated for particular wavelengths of the laser transition and form an integral part of the whole laser device 10.

The whole laser device 10 is made of all metal structure, preferably stainless steel, except fot the molybdenum hollow cathode sections and the high temperature metal-to-ceramic seal insulation utilized. The gas ballast reservoir 32 may also be made of stainless steel material. Typically, the overall length of the laser device 10 between mirrors 76 and 78 is about 25 cm which is substantially less than the typical overall length of the embodiment shown in Figures 1, 1A and 1B. The laser device is a compact and rugged structure and requires no external optical resonator structure and no Brewster windows. It also minimizes the power fluctuation due to ambient air turbulent flow within the laser resonator. The integral mirror subassemblies are described in detail in U.S. Patent No. 4,149,779.

It should be noted that both embodiments described hereinabove can provide an intense blue or green output light having many potential applications.

Although the passive gas ballast reservoir 32 has worked successfully, the active helium pressure regulator described in copending European Patent Application No. 79300361.7, (EP—A— 0 004 190) may also be utilized.

A detailed description of typical gas laser operation is not set forth herein for the purposes of brevity. The operation, for example, of helium-neon lasers is well known in the art as is the operation of metal vapor lasers, such as helium-cadmium lasers. The aforementioned US Patent No. 4021845 describes the operation of a helium-cadmium laser wherein three color laser light is created.

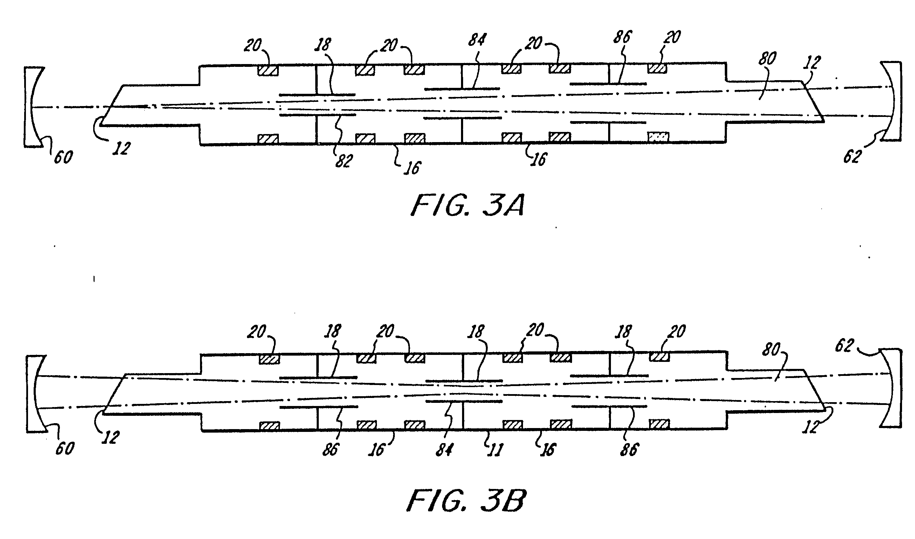

The axial arrangement of each cathode section (differing inner diameters and lengths) is determined by the particular laser resonator and laser transition involved and the laser mode configuration. As set forth hereinabove, selection of the appropriate P.d product for each cathode allows better control of the individual colors and also allows the tailoring of the laser design to the laser cavity mode. In this regard, it is to be noted that the total power extracted from a laser is proportional to the overlapped integral of the product of the cavity mode volume and the gain volume, the latter parameter being proportional to the discharge length of each cathode section. Since the laser mirrors determine the laser mode produced in the laser and are usually selected prior to the cathodes in the laser design, the cathodes 18 according to the present invention are subsequently tailored to optimize laser operation. The tailoring (and therefor control) is accomplished by selecting the length and inner diameter appropriately for each cathode to optimize overall laser operation. The selected cathode can be arranged in any manner along the optical axis such that the discharge path within the cathodes is closely matched to the selected laser mode. For example, Figures 3(a) and 3(b) are simplified representations which illustrate two typical cathode arrangements based on laser cavity configuration, each arrangement taking into account the laser mode 80 generated such that it is substantially within the bore of each hollow cathode as illustrated in order to optimize the light output extraction. Typically, cathode 82 may have an inner diameter of 0.2 cm and a length of 5 cm; cathode 84 an inner diameter of 0.3 cm and a length of 5 cm and cathode 86 an inner diameter of 0.6 cm and a length of 5 cm (although the lengths of the cathodes in the example are equal, they may be different in size if desired). Cathodes 82, 84 and 86 are identical to cathode 18 shown in Figures 1, 1A, 1B and 2, except for the variations in inner diameter. As set forth previously, the selection of the cathode inner diameter also controls the color balance of the output laser beam.

## Claims

1. A gas laser for producing an output laser beam having a plurality of colors including an elongate envelope (11) containing a gaseous medium, optically aligned hollow coaxial anode and cathode means (16, 18) for connection to a voltage supply to produce an electrical discharge in the gaseous medium, said cathode means (18) comprising at least two separate cathodes (82, 84, 86), and reflector means (60, 62) at or near the ends of the envelope, characterised in that at least two of the separate cathodes (82, 84, 86) have a different inside diameter to match the laser cavity mode such that optimal laser output power extraction for each color is produced.

2. A gas laser according to claim 1 wherein the anode means (16) and the cathodes (18; 82, 84, 86) are of metal, and the anode means is electrically insulated from the cathodes by ceramic members (20), the ceramic members being secured to the anode means and the cathodes by metal-to-ceramic seals.

3. A gas laser according to claim 1 or claim 2 wherein the gaseous medium includes a metal vapor.

4. A gas laser according to claim 3 wherein the gaseous medium comprises cadmium vapor and helium.

5. A gas laser according to any one of claims 1 to 4 wherein the ends of the envelope are sealed by Brewster windows (12) and further including reflectors (60, 62) coaxially aligned and adjacent each of said Brewster windows.

6. A gas laser according to any one of claims 1 to 4 wherein the ends of the envelope are sealed by reflectors (76, 78), one of the reflectors (76) being reflective of the output beam of the laser and the other of the reflectors (78) partially transmitting the output beam (64).

7. A gas laser according to any one of claims 1 to 6 including means (26) associated with the cathodes (18; 82, 84, 86) for coupling the cathodes to the elongate envelope (11) whereby the heat generated therein is dissipated to the external environment.

8. A gas laser according to any one of claims 1 to 7 including auxiliary anodes (42) forming part of each end section of the elongate envelope (11).

9. A gas laser according to claim 8, the laser being configured to comprise more than two cathodes and more than a single anode.

## Revendications

1. Laser à gaz pour la production d'un faisceau laser en sortie présentant une pluralité de couleurs, comportant une enveloppe allongée (11) renfermant un milieu gazeux, une anode coaxiale creuse optiquement alignée et un moyen de cathode (16, 18) pour branchement à une alimentation en tension de manière à produire une décharge électrique dans le milieu gazeux, le moyen de cathode (18) comprenant au moins deux cathodes séparées (82, 84, 86), et un moyen de réflecteur (60, 62) aux extrémités de l'enveloppe ou à proximité de ces extrémités, caractérisé en ce qu'au moins deux des cathodes séparées (82, 84, 86) ont un diamètre intérieur différent de manière à adapter le mode à cavité du laser de façon qu'il y ait production de l'extraction optimale du puissance de sortie du laser pour chaque couleur.

2. Laser à gaz selon la revendication 1, où le moyen d'anode (16) et les cathodes (18; 82, 84, 86) sont en métal, et le moyen d'anode est isolé électriquement des cathodes par des éléments en céramique (20), ces éléments en céramique étant fixés au moyen d'anode et aux cathodes par des joints métal sur céramique.

3. Laser à gaz selon la revendication 1 ou la revendication 2, où le mileu gazeux comprend une vapeur métallique.

4. Laser à gaz selon la revendication 3, où le milieu gazeux comprend de la vapeur de cadmium et de l'hélium.

5. Laser à gas selon l'une quelconque des revendications 1 à 4, où les extrémités de l'enveloppe sont scellées par des faces de Brewster (12) et comportent d'autre part des réflecteurs (60, 62) alignés coaxialement et contigus à chacune des faces de Brewster.

6. Laser à gaz selon l'une quelconque des revendications 1 à 4, où les extrémités de l'enveloppe sont scellées par des réflecteurs (76, 78), l'un des réflecteurs (76) réfléchissant le faisceau de sortie du laser et l'autre (78) transmettant partiellement le faisceau de sortie (64).

7. Laser à gaz selon l'une quelconque des revendications 1 à 6, comprenant un moyen (26) associé aux cathodes (18; 82, 84, 86) pour coupler les cathodes à l'enveloppe allongée (11), d'où il résulte que la chaleur qui y est produite est dissipée vers l'ambience extérieure.

8. Laser à gaz selon l'une quelconque des revendications 1 à 7, comprenant des anodes auxiliaires (42) qui constituent une partie de chaque section extrême de l'enveloppe allongée (11).

9. Laser à gaz selon la revendication 8, caractérisé en ce que le laser a une configuration telle qu'il comprend un nombre de cathodes supérieur à deux et un nombre d'anodes supérieur à un.

## Patentansprüche

1. Gaslaser zum Erzeugen eines eine Vielzahl von Farben aufweisenden Laserausgangsstrahls, mit einer länglichen, ein gasförmiges Medium enthaltenden Hülle (11), optisch ausgerichteten, hohlen, koaxialen Anoden-und Kathodeneinrichtungen (16, 18), die zur Erzeugung einer elektrischen Entladung in dem gasförmigen Medium mit einer Spannungsversorgung zu verbinden sind, wobei die Kathodeneinrichtung (18) wenigstens zwei getrennte Kathoden (42, 84, 86) und Reflektoreinrichtungen (60, 62) an oder nahe den Enden der Hülle aufweist, dadurch gekennzeichnet, daß wenigstens zwei der getrennten Kathoden (82, 84, 86) einen unterschiedlichen Innendurchmesser zur Anpassung an den Laser-Hohlraum-Modus aufweisen, so daß eine optimale Entnahme für die Laserausgangsenergie für jede Farbe erzeugt wird.

2. Gaslaser nach Anspruch 1, bei dem die Anodeneinrichtungen (16) und die Kathoden (18; 82, 84, 86) aus Metall sind und die Anodeneinrichtungen elektrisch von den Kathoden durch keramische Glieder (20) isoliert sind, welche an den Anodeneinrichtungen und den Kathoden durch Metall-Keramik-Dichtungen befastigt sind.

3. Gaslaser nach Anspruch 1 oder 2, bei dem das gasförmige Medium einen Metalldampf aufweist.

4. Gaslaser nach Anspruch 3, bei dem das gasförmige Medium Kadmiumdampf und Helium unfaßt.

5. Gaslaser mit irgendeinem der Ansprüche 1 bis 4, bei dem die Enden der Hülle mit Brewster-Fenstem (12) abgedichtet sind und welcher Reflektoren (60, 62) aufweist, die koaxial ausgerichtet sind und nahe jedem der Brewster-Fenster angeordnet sind.

6. Gaslaser nach irgendeinem der Ansprüche 1 bis 4, bei dem die Enden der Hülle mit Reflektoren (76, 78) abgedichtet sind, wobei einer der Reflektoren (76) für den Ausgangsstrahl des Lasers reflektierend ist und der andere der Reflektoren (78) teilweise den Ausgangsstrahl (64) hindurchläßt.

7. Gaslaser nach irgendeinem der Ansprüche 1 bis 6, der mit den Kathoden (18; 82, 84, 86) verbundene Einrichtungen (26) aufweist, um die Kathoden mit der länglichen Hülle (11) zu koppeln, wodurch die in ihnen erzeugte Wärme an die äußere Umwelt abgeführt wird.

8. Gaslaser nach irgendeinem der Ansprüche 1 bis 7, welcher zusätzliche Anoden (42) aufweist, die Teil eines jeden Endabschnittes der länglichen Hülle (11) bilden.

9. Gaslaser nach Anspruch 8, wobei der Laser so ausgebildet ist, daß er mehr als zwei Kathoden und mehr als eine einzige Anode umfaßt.

FIG. 1

TO FIG. 1B

FIG. 1A

FIG. 1B

TO FIG. 1A

0 009 965

FIG. 2

FIG. 3A

FIG. 3B